# EUROPEAN PATENT SPECIFICATION

(11) **EP 0 560 404 B1**
(45) Date of publication and mention of the grant of the patent: **13.09.1995**
(21) Application number: 93106707.8
(22) Date of filing: 06.01.1989
(51) Int. Cl.: F16L 11/00, F16L 59/153

(54) **Method and apparatus for making a python bundle of tubes**
Verfahren und Vorrichtung zur Herstellung eines Rohrbündels
Procédé et appareil pour construire un faiseau de tubes

(30) Priority: 19.01.1988 GB 8801109
(43) Date of publication of application: 15.09.1993
(62) Divisional of application: 89300119.8
(73) Proprietor: Brown, Colin, Oakham Rutland Leicestershire, LE15 8EX (GB)
(72) Inventor: Brown, Colin, Oakham Rutland Leicestershire, LE15 8EX (GB)
(74) Representative: McNeight, David Leslie

(56) References cited:
- EP-A- 0 145 831
- FR-A- 2 084 606
- GB-A- 2 166 833
- GB-A- 2 188 695
- US-A- 3 590 855
- US-A- 4 529 009

## Description

This invention relates to methods and apparatus for making a python, that is to say a bundle of tubes encased in a foam sheath such as is used for the conveyance of beverages from cellar or cool store to a dispensing point such as a bar or soft drinks counter.

Such bundles of tubes are required to be of surprisingly substantial length, and are used normally in lengths up to and exceeding 100 metres. The tube bundles are sheathed in a foam insulating material so as to maintain their low temperature up to the dispensing point, where they may need "flash" cooling or maybe heating immediately prior to dispensing in order to be served at the correct temperature.

The tube bundles, of "food grade" plastics material for the conveyance of beverages and such additional "service", e.g. coolant tubes such as may be required, are assembled into a bundle and wrapped, usually in a cling-film material. The bundles are assembled to particular requirements, some at least being standard or substantially so by virtue of their being widely specified by brewery chains or like enterprises.

As described in GB 2 166 833A, great difficulties are experienced in fitting the foam sheath on to the bundle of tubes. The practice of lubrication using talc is said there to be undesirable, but another problem is said to be that only short lengths of sheath can be pulled over the tube bundle, each length requiring to be accurately butted to its neighbour. The use of such short lengths is dictated clearly by the difficulty of using long lengths, and not, as suggested in GB 2 166 833A, because only short lengths, of a few metres, were available.

In any event, the problem is solved, according to GB 2 166 833A, by first slitting the foam sheath along its length and introducing the bundle via the slit, which is then adhesively repaired. This solution has in fact been widely adopted.

Difficulties have however arisen in practice with this method. The repaired slit constitutes a continous line of impaired thermal resistance along which condensate forms in considerable quantity. The condensate drips from the outer wrapping of the python and has obvious deleterious effects on the structure through which the python passes.

US-A-4,529,009 discloses a multiple core hose assembly comprising a plurality of discrete hose assemblies, each including a primary hose formed from a flexible synthetic plastics material, having a fluid passage extending generally longitudinally therethrough, and a plurality of generally longitudinally extending recesses adapted to seat secondary hoses; a plurality of secondary hoses formed from a flexible synthetic plastics material, seated in the primary hose recesses, the secondary hoses having fluid passages extending generally longitidunally therethrough in heat transfer relation with the primary hose passage; and a flexible tubular sheath of a thermally insulating material, the primary/secondary hose assemblies being assembled together, side-by-side, with the seated secondary hoses disposed around the primary hose passages, within the sheath. To increase the length of the sheath which may be applied in a single operation, the sheath may be expanded during insertion of the hose assemblies, for example by applying a partial vacuum to the exterior of the sheath.

A satisfactory method for doing this, however, cannot be derived from US-A-4,529,009.

The present invention provides such a satisfactory method.

The invention comprises a method for making a python by inserting a bundle of tubes into an elongate foam sheath and expanding the sheath during insertion of the bundle of tubes to increase the length of sheath which may be applied in a single operation, the sheath being expanded during the insertion of the bundle of tubes by applying an overpressure to the interior of the sheath, characterised in that the leading end of the tube bundle to be inserted into the sheath is attached to a pig for guiding its passage through the sheath and the pig may comprise a bullet shaped member having a rearwardly open cavity into which the leading end of the tube bundle fits, and is thus slightly larger in diameter than the tube bundle.

The bundle of tubes may be introduced through one end of the sheath via a funnel, and the sheath may be clamped around the funnel.

The internal diameter of the sheath may be enlarged by 5 mm and even up to 20 mm in some cases.

The bundle of tubes may be wrapped prior to being inserted into the foam sheath, and may be wrapped continuously with the insertion of the wrapped bundle into the sheath.

The invention also comprises a python made by a method according to the invention.

The method for making a python will now be described with reference to the accompanying drawings, in which :-
- Figure 1: is a cross-section of a python;
- Figure 2: is a cross-section of a sheath and bundle of tubes during the introduction of the latter according to the invention;
- Figure 3: is a diagrammatic illustration of an assembly line for making the python;
and
- Figure 4: is a longitidinal section through a pig used in the method.

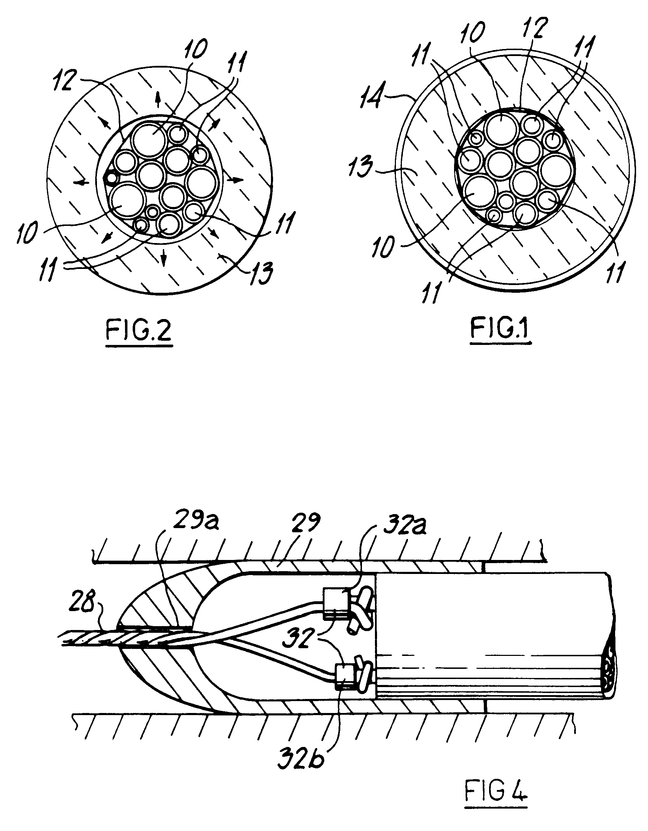

Figure 1 illustrates in cross-section a python as may be used for conveying beverages from a cellar or cold store to a bar in a public house, hotel, restaurant or like establishment.

The python comprises a bundle of tubes 11 which may be of various sizes and which are usually colour and/or number coded. Larger tubes 10 may be used for circulating water or other coolant.

The tubes 11 are wrapped in a bundle by for example a cling film wrapping 12 and are encased in a soft, flexible and resilient foam sheath 13 which is in turn wrapped in a protective plastics material outer wrapping 14. The tubes 11 are of a food grade polymer material such as polyethylene.

Such a python is know per se, but difficulty was experienced in threading the tube bundle through the sheath 13 and this could only be done in short lengths of a few metres and with the aid of talc as a lubricant. To solve that problem the tubular sheath 13 was first slit lengthwise and then opened out so it could be placed around the tube bundle. The slit was then repaired by adhesive prior to wrapping the now sheathed tube bundle in the protective wrap 14. This then gave rise to the further problem, however, that the insulation afforded by the repaired slit was inadequate and condensation would form along the length of the python at the position where the repaired slit underlay the protective wrap 14. The condensation would drip off and cause damage to woodwork and decoration in the property in which the python was installed.

As mentioned above, a suggestion was made in US-A-4,529,009 to apply unslit sheath to a multiple core hose assembly, increasing the length of sheath that could be applied in a single operation by expanding the sheath during hose insertion, for example by applying a partial vacuum to the exterior of the sheath.

A practical method for doing that is disclosed in EP-A-0 328 233 from which this application is divided. The present invention provides that the sheath is expanded by internal pressure.

The present invention provides that pythons as illustrated in Figure 1 can be made in long lengths - 20 or 25 metres is a convenient length of sleeve and several sleeves may be applied at once to make a really long python, say 100 metres long, which is standard, or even longer - with relatively few butt joints between sheath sections. In fact, the limitation is the available length of sheath material, but in practice, perhaps, it is just not convenient to work in lengths greater than 25 metres of sheath because of space limitations.

The method is illustrated simply in Figure 2, which shows the bundle of tubes 11 wrapped in cling film 12 being introduced into a foam sheath 13 which has had its internal diameter expanded as illustrated by the arrows. Once the wrapped bundle is in place, the expansion force is relieved and the foam sheath reverts to its original internal diameter to closely surround and grip the bundle. The outer wrapping 14 of Figure 1 can then be applied conventionally.

While other expansion methods may be possible, pneumatic expansion is certainly effective.

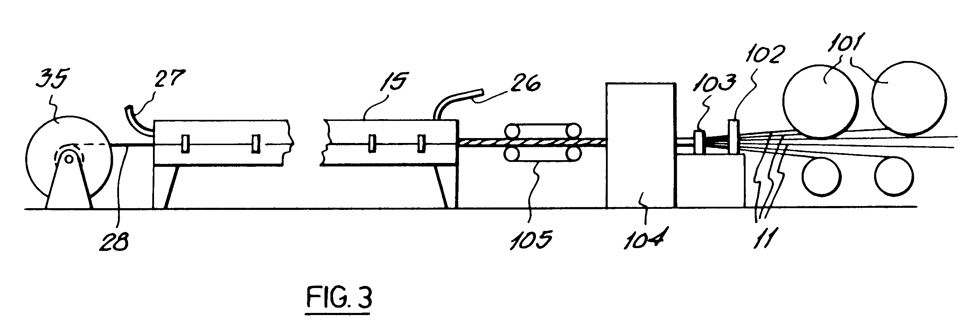

Figure 3 illustrates diagrammatically an assembly line for python in which the sheath's inner diameter is expanded pneumatically.

A length of sheath material 13 is placed in a chamber 15 - as illustrated in this is a sealable chamber 15 in the form of a lidded box, the box comprising a base and a lid secured thereto by a piano hinge. The sealable box is appropriate to the method covered by parent EP-A-0 328 233; for purposes of the present invention, in which it is not necessary to apply a partial vacuum to the exterior of the sheath, it is unnecessary.

The box can conveniently be made in a length of 25 metres, to accommodate a similar length of sheath.

At the right-hand inlet end of the box 15, the sheath protrudes over a funnel which is split into two halves so that it can be applied and removed laterally without threading over an end of the sleeve, for reasons which will become clear later. The sheath end is clamped to the funnel e.g. by a hose grip type of clamp.

The funnel expands the end of the sheath and is pushed sealingly into the aperture in the end enclosure of the box 15.

The idea, now, is that the internal diameter of the sheath 13 is pneumatically expanded. An overpressure is introduced to the interior of the sheath by a pressure air connection 27 at the left hand end of the box.

The pressure air connection 27 can, before sealing off, be used to blow through the installed sheath 13 a butterfly-type carrier (not shown) for a hauling line 28 which will be attached to haul the bundle of tubes through the sheath.

In any event, the differential pressure from inside to outside the sheath is such as will cause the wall of the sheath to compress and indeed to cause the internal diameter of the sheath 13 to expand by some 5mm, to the condition illustrated in cross-section in Figure 2. In this condition there is no substantial frictional resistance to the passage of the tube bundle through the sheath.

The diameter of the funnel is chosen appropriately to the diameter of the sheath to ensure good sealing relationship. Different funnel configurations and sizes might be used in connection with the process described herein.

The leading end of the tube bundle to be inserted in the sheath is attached to a pig 29 for guiding its passage through the sheath. The pig 29 is hauled through the sheath by the hauling line or cable 28 which is on a winch 35 situated at the end of the box 15. The cable 28 is attached to the end of the bundle of tubes 11 by two stepped locking inserts 32. A larger diameter such insert 32a in inserted into a larger tube and a smaller such insert 32b is inserted into a smaller tube 11. Hauling wire or cable 28 is introduced into a free end bore of the insert, which is cut away so as to expose a lateral bore aperture through which the hauling wire or cable 28 can be pulled and, to secure the wire or cable, can be knotted. The two wires are quickly spliced to become one which passes through there a bore 29a in the nose of the pig 29.

The pig 29 itself is a bullet shaped member having a rearwardly open cavity into which the leading end of the tube bundle fits. The pig 29 is thus slightly larger in diameter than the tube bundle, but not so big as to give rise to excessive frictional drag against the inner wall of the expanded sheath.

With the hauling wire or cable 28 through the sheath, the leading end of the wrapped bundle of tubes 11 in the pig 29 and the pig in the funnel, the inner wall of the sheath 13 is expanded and the pig is hauled through the sheath by a winch 35.

The apparatus illustrated in Figure 3 can conveniently insert a wrapped bundle of tubes into a 20 or 25 meter length of sheath. For pythons longer than this the wrapped tube bundle is inserted serially into two or more, usually four, such lengths of sheath to make a python fifty or one hundred meters in length.

The finished assembly is then wrapped in a protective cover in the normal way.

The tube bundle is, as illustrated, assembled continously with the sheathing thereof according to the invention. Individual tubes 11 are withdrawn from a creel or drum support arrangment 101 (Figure 3) through a collecting guide comb 102 and a bundle forming die 103 and from there pass to a cling-film wrapping machine 104 (of conventional type). The wrapped bundle is fed from there into the box 15 by a caterpillar-track like belt feeder 105.

## Claims

1. A method for making a python by inserting a bundle of tubes (11) into an elongate foam sheath (13) and expanding the sheath (13) during insertion of the bundle of tubes so as to increase the length of sheath (13) which may be applied in a single operation, the sheath (13) being expanded during the insertion of the bundle of tubes (11) by applying an overpressure to the interior of the sheath, characterised in that the leading end of the tube bundle to be inserted into the sheath (13) is attached to a pig (29) for guiding its passage through the sheath, the pig (29) comprising a bullet shaped member having a rearwardly open cavity into which the leading end of the tube bundle (11) fits, and being thus slightly larger in diameter than the tube bundle (11).

2. A method according to claim 1, characterised in that the bundle of tubes (11) is introduced through one end of the sheath (15) via a funnel around which the sheath (13) may be clamped.

3. A method according to claim 1 or claim 2, characterised in that the internal diameter of the sheath (13) is enlarged by up to 20 mm.

4. A method according to any one of claims 1 to 3, characterised in that the pig (29) is hauled through the sheath (13) by a cable and winch (28,35).

5. A method according to any one claims 1 to 4, characterised in that the bundle of tubes (11) is inserted serially into two or more lengths of sheath (13).

6. A python characterised by being made by a method according to any one of claims 1 to 5.

## Patentansprüche

1. Verfahren zur Herstellung einer Rohrbündelanordnung durch Einführen eines Rohrbündels (11) in eine langgestreckte Schaumstoffhülle (13) und Ausdehnung der Hülle (13) während der Einführung des Rohrbündels, so daß die Länge der Hülle (13), die in einem einzelnen Arbeitsvorgang angewandt werden kann, vergrößert wird, wobei die Hülle (13) während der Einführung des Rohrbündels (11) durch Anlegen eines Überdrucks auf das Innere der Hülle ausgedehnt wird,
**dadurch gekennzeichnet,**
daß das führende Ende des in die Hülle (13) einzuführenden Rohrbündels zur Lenkung seines Durchgangs durch die Hülle an einem Führungselement (29) befestigt ist, wobei das Führungselement (29) ein geschoßförmiges Element mit einer rückwärtsgewandt offenen Höhlung umfaßt, in welche das führende Ende des Rohrbündels (11) hineinpaßt, und das daher einen geringfügig größeren Durchmesser als das Rohrbündel (11) besitzt.

2. Verfahren nach Anspruch 1, dadurch gekennzeichnet, daß das Rohrbündel (11) durch ein Ende der Hülle (15) über einen Trichter eingeführt wird, um welchen die Hülle (13) befestigt werden kann.

3. Verfahren nach Anspruch 1 oder 2, dadurch gekennzeichnet, daß der innere Durchmesser der Hülle (13) um bis zu 20 mm vergrößert ist.

4. Verfahren nach einem der Ansprüche 1 bis 3, dadurch gekennzeichnet, daß das Führungselement (29) durch die Hülle (13) mit einem Seil und einer Winde (28,35) gezogen wird.

5. Verfahren nach einem der Ansprüche 1 bis 4, dadurch gekennzeichnet, daß das Rohrbündel (11) nacheinander in zwei oder mehr Längen der Hülle (13) eingeführt wird.

6. Rohrbündelanordnung, dadurch gekennzeichnet, daß es durch ein Verfahren nach einem der Ansprüche 1 bis 5 hergestellt wird.

## Revendications

1. Procédé pour réaliser un élément multitubulaire en introduisant un faisceau de tubes (11) à l'intérieur d'une chemise en mousse allongée (13) et en dilatant la chemise (13) pendant l'introduction du faisceau de tubes de manière à augmenter la longueur de ladite chemise (13) qui peut être appliquée en une opération unique, la chemise (13) étant dilatée pendant l'introduction du faisceau de tube (11) en appliquant une surpression à l'intérieur de la chemise, caractérisée en ce que l'extrémité avant du faisceau de tubes à introduire à l'intérieur de la chemise (13) est attachée à un furet (29) afin de guider son passage à travers la chemise, le furet (29) comprenant un élément en forme d'ogive qui présente une cavité ouverte vers l'arrière et dans lequel s'emboîte l'extrémité avant du faisceau de tubes (11), et qui est ainsi d'un diamètre légèrement plus important que le faisceau de tubes (11).

2. Procédé selon la revendication 1, caractérisé en ce que le faisceau de tubes (11) est introduit à travers une extrémité de la chemise (15) via un entonnoir autour duquel on peut pincer la chemise (13).

3. Procédé selon l'une ou l'autre des revendications 1 et 2, caractérisé en ce que le diamètre intérieur de la chemise (13) est agrandi de jusqu'à 20 mm.

4. Procédé selon l'une quelconque des revendications 1 à 3, caractérisé en ce que le furet (29) est tiré à travers la chemise (13) par un câble et un treuil (28, 35).

5. Procédé selon l'une quelconque des revendications 1 à 4, caractérisé en ce que le faisceau de tubes (13) est introduit en série à l'intérieur de deux ou plusieurs longueurs de chemise (13).

6. Elément multitubulaire caractérisé en ce qu'il est réalisé par un procédé selon l'une quelconque des revendications 1 à 5.
